# DEMANDE DE BREVET EUROPEEN

(11) **EP 2 031 503 A1**
(43) Date de publication de la demande: **04.03.2009**
(21) Numéro de dépôt: 08104436.4
(22) Date de dépôt: 17.06.2008
(51) Int. Cl.: G06F 9/445

(54) **Procédé et système de chargement de logiciels constructeur dans un PLC**

(30) Priorité: 19.06.2007 FR 0755832
(71) Demandeur: Schneider Electric Industries SAS, 92500 Rueil-Malmaison (FR)
(72) Inventeur: Godicke, Thomas c/o Schneider Electric Industries SAS, 92500, RUEIL-MALMAISON (FR)
(74) Mandataire: Dufresne, Thierry

(57) **Abrégé**

L'invention concerne un procédé et un système de chargement d'au moins un logiciel-constructeur dans un automate programmable (1) comportant un module de stockage (10) qui dispose d'un logement (11) pour l'insertion d'un support mémoire amovible. Le procédé comprend une étape de stockage dans un support mémoire amovible (2) d'au moins un logiciel-constructeur destiné à au moins un module (10, 20) de l'automate (1), une étape de chargement dudit logiciel-constructeur dans une mémoire non volatile dudit module (10, 20) de l'automate (1), à partir du support mémoire amovible (2) inséré dans le logement (11) du module de stockage (10).

## Description

La présente invention se rapporte à un procédé et à un système de chargement d'au moins un logiciel-constructeur dans un automate programmable, en particulier de type modulaire.

Un automate programmable ou PLC ("Programmable Logical Controller") est un équipement d'automatisme capable de piloter, commander et/ou surveiller un ou plusieurs process, notamment dans le domaine des automatismes industriels, du bâtiment ou de la distribution électrique.

Lorsqu'il est de construction modulaire, un automate programmable PLC est composé de différents modules qui communiquent entre eux par un bus de transmission, appelé dans ce domaine bus "fond de panier" (ou appelé aussi bus "backplane"). Les modules sont fixés mécaniquement dans un rack, lequel supporte également le bus "fond de panier" ainsi que des éléments de connexion destinés à réaliser les liaisons nécessaires entre les modules et le bus. Le nombre de modules de l'automate programmable dépend bien entendu de la taille et du type du process à automatiser.

Typiquement, un automate programmable comprend :
- un module d'alimentation fournissant les différentes tensions aux autres modules à travers le bus fond de panier.
- un module unité centrale UC qui comporte un microprocesseur principal, ou un circuit ASIC, capable d'exécuter un logiciel-constructeur principal embarqué (appelé également "firmware").
- des modules optionnels tels que :
   - des modules d'entrées/sorties E/S de divers types en fonction du process à commander. Ces modules E/S sont reliés à des capteurs et des actionneurs participant à la gestion automatisée du process,
   - des modules de comptage, de régulation, de commandes d'axes,
   - des modules de communication vers des réseaux de communication (Ethernet, ...) ou des interfaces homme-machine (écran, clavier,...).

Le logiciel-constructeur principal du module unité centrale UC est habituellement stocké dans une mémoire non volatile du module, de type mémoire Flash par exemple, et intègre notamment un système d'exploitation OS temps réel. Le logiciel-constructeur peut également contenir, en plus de fichiers binaires exécutables, d'autres types de fichiers tels que des fichiers html présentant des pages de documentation ou de diagnostic, consultables depuis un navigateur web.

Le module unité centrale UC comporte par ailleurs un programme application, ou logiciel-utilisateur, contenant les instructions à exécuter par le logiciel-constructeur principal pour effectuer les opérations d'automatisme souhaitées et contenant aussi certains paramètres de l'application. De façon connue, ce logiciel-utilisateur peut être stocké dans un support mémoire amovible, tel qu'une carte SD ("Secure Digital Card"), destiné à être inséré dans un logement prévu à cet effet dans l'automate. Généralement, le module unité centrale UC comporte également une connexion en face avant vers des outils de programmation et des équipements de type ordinateur personnel PC extérieurs à l'automate, via un port de communication supportant par exemple le protocole TCP/IP ou tout autre protocole de communication.

Certains modules optionnels de l'automate comportent eux aussi un microprocesseur, ou un circuit ASIC, capable d'exécuter un logiciel-constructeur optionnel embarqué, stocké dans une mémoire non volatile du module considéré. On parle alors parfois de module "intelligent". Les logiciels-constructeur optionnels embarqués peuvent eux aussi contenir, en plus de fichiers binaires exécutables, d'autres types de fichiers tels que des fichiers html présentant des pages de documentation ou de diagnostic des modules correspondants, consultables depuis un navigateur web.

De plus, certains modules de l'automate, y compris le module unité centrale UC ou des modules "intelligents", peuvent inclure des sous-systèmes comportant un microprocesseur ou circuit ASIC auxiliaire supplémentaire qui est capable d'exécuter un logiciel-constructeur auxiliaire embarqué, différent du logiciel-constructeur principal et stocké dans une mémoire non volatile auxiliaire du module considéré.

Dans les automates programmables PLC connus, les logiciels-constructeur ("firmware") sont directement chargés dans des mémoires Flash des différents modules par le constructeur lui-même, à partir d'un équipement extérieur. Pour le client utilisateur, cette situation présente l'inconvénient de rendre plus lourdes les opérations de mise à jour des logiciels-constructeur lors des changements de version successives, ainsi que lors des opérations de remplacement ou d'échange de modules automate défectueux.

Aussi, un but de l'invention est de proposer un procédé de chargement d'au moins un logiciel-constructeur dans un automate programmable modulaire disposant d'un logement pour l'insertion d'un support mémoire amovible, qui permettrait d'offrir à l'utilisateur de l'automate une manipulation plus facile des logiciels-constructeur en cas de changement de version ou de remplacement d'un module automate par un autre.

Conformément à l'invention, dans un automate programmable comportant un module de stockage qui dispose d'un logement pour l'insertion d'un support mémoire amovible, ce but est atteint du fait que le procédé comprend les étapes suivantes :
- une étape de stockage dans un support mémoire amovible d'au moins un logiciel-constructeur destiné à au moins un module de l'automate,
- une étape de chargement dudit logiciel-constructeur dans une mémoire non volatile dudit module de l'automate, à partir du support mémoire amovible inséré dans le logement du module de stockage.

Ainsi, le procédé conforme à l'invention consiste dans un premier temps à stocker le logiciel-constructeur dans un support mémoire amovible intermédiaire, tel qu'une carte mémoire amovible de type SD card ("Secure Digital Card"). Ce logiciel-constructeur peut être le logiciel-constructeur principal destiné au module unité centrale UC et/ou les logiciels-constructeur optionnels destinés aux modules optionnels "intelligents" et/ou d'éventuels logiciels-constructeur auxiliaires. Dans un deuxième temps, lorsque le support mémoire amovible est inséré dans le logement prévu dans le module de stockage de l'automate programmable, le ou les logiciels-constructeur mémorisés sur le support mémoire amovible sont chargés dans les mémoires non volatiles, par exemple de type Flash ou RAM sauvegardée, des modules de l'automate auxquels ils sont destinés. Le module de stockage est de préférence le module unité centrale UC, mais pourrait être également un module optionnel doté d'un logement pour support mémoire amovible et capable de communiquer avec un équipement extérieur à l'automate.

Avantageusement, quand les opérations de chargement sont terminées, le support mémoire amovible peut être retiré du logement et conservé par ailleurs en vue d'être réutilisé ultérieurement, notamment pour mettre à jour de manière très simple un parc entier d'automates avec une version homogène des différents logiciels-constructeur. Il suffit pour cela d'insérer le support dans le logement de chaque automate et d'exécuter l'étape de chargement selon une procédure qui sera décrite plus loin.

Par ailleurs, un même support mémoire amovible peut aussi servir à stocker le logiciel-utilisateur de l'automate programmable en plus des logiciels-constructeur. On peut ainsi notamment changer un module unité centrale UC défectueux d'un automate par un nouveau module, puis charger facilement dans le nouveau module les dernières versions des logiciels-constructeur et du logiciel-utilisateur à partir d'un seul et même support.

La présente invention concerne également un système de chargement d'au moins un logiciel-constructeur dans un automate programmable modulaire, ledit automate comportant un module de stockage disposant d'un logement pour l'insertion d'un support mémoire amovible. Le système de chargement comprend un composant de chargement-maître (ou "Master Loader") qui est exécuté dans le module de stockage et qui est apte à charger un logiciel-constructeur, stocké dans un support mémoire amovible inséré dans le logement, dans une mémoire non volatile d'un des modules de l'automate.

Chaque module de l'automate susceptible de recevoir un logiciel-constructeur (principal, optionnel ou auxiliaire) comprend un composant de chargement-module (ou "Device Loader") apte à charger dans une mémoire non volatile de ce module un logiciel-constructeur préalablement stocké dans ledit support mémoire amovible et transmis par le composant de chargement-maître.

Selon une caractéristique, le composant de chargement-maître est capable d'effectuer le chargement d'un logiciel-constructeur dans une mémoire non volatile d'un module de l'automate distinct du module de stockage et relié au module de stockage uniquement par un bus fond de panier de l'automate. On est ainsi capable de charger et de mettre à jour rapidement l'ensemble des logiciels-constructeur existant pour l'ensemble des modules d'un automate programmable modulaire, à partir d'un seul support mémoire amovible.

Selon un mode de réalisation, l'invention prévoit que l'étape de chargement du ou des logiciels-constructeur dans le ou les modules concernés à partir du support mémoire amovible du module de stockage peut être réalisée automatiquement à partir d'une action ou d'un événement déclenchant l'exécution d'un fichier de commande (par exemple de type fichier ".ini" ou ".bat") par le composant de chargement-maître, ledit fichier de commande étant stocké dans le support mémoire amovible.

Ce fichier de commande comprend les différentes opérations à effectuer par le composant de chargement-maître "Master Loader" pour transférer le ou les logiciels-constructeur vers le ou les mémoires non volatiles du ou des modules concernés.

Selon une autre caractéristique, le module de stockage comporte des moyens de stockage, comprenant préférentiellement un serveur FTP, permettant de stocker au moins un logiciel-constructeur sur le support mémoire amovible inséré dans le logement, à partir d'un équipement extérieur à l'automate et relié au module de stockage

La description qui va suivre en regard du dessin annexé, donné à titre d'exemple non limitatif, fera bien comprendre en quoi consiste l'invention et comment elle peut être réalisé.

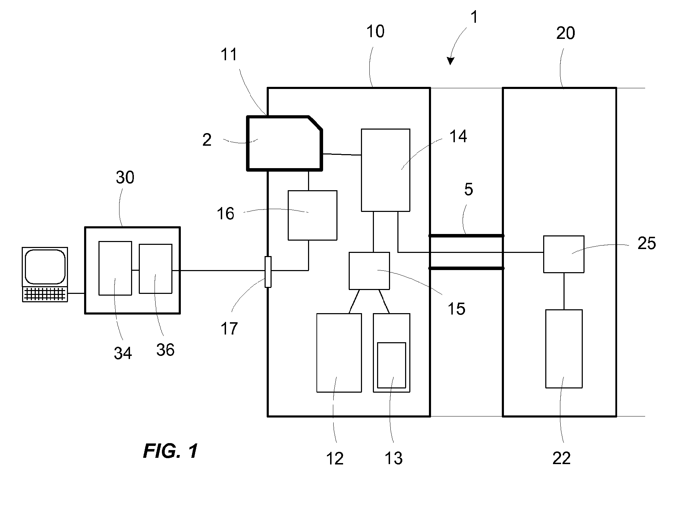

La figure 1 est un schéma simplifié d'un automate programmable modulaire comprenant un système de chargement de logiciels-constructeur conforme à l'invention.

Sur la figure 1 est représenté un automate programmable modulaire PLC 1 comprenant notamment un module unité centrale UC 10 et un module optionnel 20 "intelligent", par exemple un module de communication, un module de comptage ou autre. Ces modules 10, 20 sont reliés entre eux par un bus de communication 5 fond de panier ("backplane"). Bien entendu, d'autres modules, non représentés sur la figure 1, peuvent être inclus dans l'automate 1, comme un module d'alimentation ou d'autres modules optionnels de type Entrées/Sorties.

L'automate 1 dispose dans le module UC 10 d'un logement 11 pour l'insertion d'un support mémoire amovible 2, tel qu'une carte mémoire de type SD Card dotée de mémoire RAM sauvegardée ou préférentiellement de mémoire flash. Cette carte mémoire 2 sert d'ordinaire à stocker le logiciel-utilisateur, c'est-à-dire le programme application et les paramètres associés permettant d'effectuer les opérations d'automatisme souhaitées par l'utilisateur.

Le module UC 10 comprend un microprocesseur ou un ASIC principal (non représenté en figure 1) chargé d'exécuter un logiciel-constructeur principal ("firmware") qui est stocké dans une mémoire non volatile 12 du module UC 10. De plus, le module UC 10 inclut également un sous-système doté d'un microprocesseur ou d'un ASIC auxiliaire capable d'exécuter un logiciel-constructeur auxiliaire qui est stocké dans une mémoire non volatile auxiliaire 13 du module UC 10.

Le module optionnel 20 comprend aussi un microprocesseur ou un ASIC (non représenté en figure 1) capable d'exécuter un logiciel-constructeur optionnel ("firmware") qui est stocké dans une mémoire non volatile 22 du module 20. De même, on pourrait aussi envisager que le module 20 inclut également un sous-système exécutant un logiciel-constructeur auxiliaire stocké dans une autre mémoire non volatile du module 20. Les différentes mémoires non volatiles 12, 13, 22 sont préférentiellement des mémoires Flash.

Outre le logiciel-utilisateur, la carte mémoire 2 peut contenir les différents logiciel-constructeur de l'automate 1, à savoir le logiciel-constructeur principal destiné à être chargé dans la mémoire Flash 12 du module unité centrale UC 10, le logiciel-constructeur optionnel destiné à être chargé dans la mémoire Flash 22 du module optionnel 20 et le logiciel-constructeur auxiliaire destiné à être chargé dans la mémoire Flash 13 du module unité centrale UC 10.

Le module unité centrale UC 10 comprend un composant logiciel de chargement-maître (appelé généralement "Master Loader") destiné à effectuer et à contrôler le chargement des différents logiciels-constructeur, stockés dans la carte mémoire 2, vers les mémoires Flash des différents modules concernés.

Chaque module comprend un composant logiciel de chargement-module 15, 25 (appelé généralement "Device Loader") permettant d'accéder en lecture et en écriture aux mémoires Flash dudit module et d'y charger le logiciel-constructeur lors d'une mise à jour par exemple. Le composant de chargement-maître "Master Loader" 14 fait le lien entre les fichiers mémorisés dans la carte mémoire 2 et les différents composants de chargement-module "Device Loader" 15, 25 concernés. Ainsi, le composant de chargement-maître 14 est aussi capable de lire les logiciels-constructeur déjà installés dans les modules de l'automate 1 et de les stocker dans la carte mémoire 2.

Comme le module unité centrale UC 10 est capable de stocker et de charger les différents logiciels-constructeur de l'automate 1, il sera appelé par la suite module de stockage 10. Il faut cependant souligner que tout module, et pas seulement le module unité centrale UC 10, qui possède un port de connexion 17 vers un réseau de communication extérieur et qui dispose d'un emplacement 11 pour un support mémoire amovible 2 peut également jouer le rôle de module de stockage comprenant un composant de chargement-maître "Master Loader" 14. Il peut donc y avoir plusieurs modules de stockage dans un automate programmable.

Selon l'invention, le procédé de chargement mis en oeuvre par le système de la figure 1 comprend :
- une première étape, dite étape de stockage, qui permet de stocker dans la carte mémoire 2 au moins un logiciel-constructeur (principal, optionnel, auxiliaire) destiné à au moins un module 10, 20 de l'automate 1,
- une seconde étape, dite étape de chargement, qui permet de charger le ou les logiciels-constructeur dans la ou les mémoires non volatiles 12, 13, 22 des modules 10, 20 concernés de l'automate 1, à partir de la carte mémoire 2 quand elle est insérée dans le logement 11 du module de stockage 10.

La première étape de stockage consiste donc à stocker les différents logiciels-constructeur relatifs aux modules 10, 20 de l'automate 1 dans la carte mémoire 2, en plus d'un éventuel logiciel-utilisateur de l'automate 1 qui peut lui aussi être mémorisé dans la carte mémoire 2. Cette étape de stockage peut être réalisée selon deux modes particuliers.

Selon un premier mode, l'étape de stockage est effectuée "off-line", c'est-à-dire lorsque la carte mémoire 2 n'est pas insérée dans un logement 11 de l'automate 1. On utilise alors un équipement extérieur à l'automate de type ordinateur PC qui est équipé d'un logement adapté pour recevoir une telle carte mémoire et qui est capable d'y transférer les logiciels-constructeur, en plus d'un éventuel logiciel-utilisateur.

Selon un second mode, l'étape de stockage est effectuée lorsque la carte mémoire 2 est déjà insérée dans le logement 11 du module de stockage 10. Dans ce second mode, l'étape de stockage est effectuée à l'aide d'un protocole de transfert de fichiers à partir d'un équipement extérieur 30 connecté à un port 17 de communication du module de stockage 10, un port TCP/IP par exemple, pour transférer les logiciels depuis l'ordinateur 30 jusqu'à la carte mémoire 2.

De préférence, ledit protocole de transfert de fichiers est le protocole FTP ("File Transfer Protocol") qui présente l'avantage d'être très simple à utiliser et largement répandu. L'équipement extérieur est alors un ordinateur 30 (de type PC) équipé d'un client FTP 36 et connecté à l'automate via un réseau Ethernet TCP/IP, par exemple. Le module de stockage 10, qui est généralement le module unité centrale UC, comprend un serveur FTP 16 capable de répondre à des requêtes provenant du client FTP 36 via le port de communication TCP/IP 17. Par ailleurs, ledit serveur FTP 16 est également capable de contrôler un système de gestion classique de fichiers ("DOS File System") sur la carte mémoire 2. Les différents fichiers composant le ou les logiciels-constructeur sont donc stockés sur la carte mémoire 2 en utilisant ce système de gestion classique de fichiers, très facile d'emploi pour un utilisateur à partir de l'ordinateur extérieur 30. Le serveur FTP 16 répond aux requêtes du client FTP 36 et gère le stockage des logiciels dans la carte mémoire 2.

Il faut cependant souligner que l'utilisation du protocole FTP n'est pas obligatoire et que d'autres protocoles d'échange de fichiers pourraient être envisagés.

Dans la deuxième étape du procédé, en présence de la carte mémoire 2 dans le logement 11 du module de stockage 10, le ou les logiciels-constructeur, préalablement stockés dans la carte mémoire 2, sont ensuite chargés vers les mémoires Flash 12, 13, 22 des différents modules 10, 20 concernés de l'automate 1.

Selon un mode de réalisation préféré, cette étape de chargement peut être effectuée automatiquement, à partir d'une action ou d'un événement déclenchant l'exécution d'un fichier de commande qui sera exécuté par le composant de chargement-maître 14. Ce fichier de commande, par exemple de type ".ini" ou ".bat", est stocké dans la carte mémoire 2 et est donc lui aussi téléchargeable par FTP.

L'action ou l'événement déclenchant peut être indifféremment une action extérieure comme la mise sous tension de l'automate PLC, une remise à zéro (RESET), la modification d'un bit particulier ("flag") dans une mémoire de données de l'automate PLC, la modification d'une entrée d'un module E/S de l'automate PLC, la réception d'un ordre venant de l'extérieur via un réseau de communication TCP/IP, etc...

Selon une variante, l'étape de chargement peut également être initialisée à partir du client FTP 36 en commandant l'exécution par le serveur FTP 16 d'un fichier de script, du type fichier ".Ist". Dans ce contexte, le serveur FTP 36 doit pouvoir effectuer certaines commandes FTP spécifiques, telles que par exemple :
- commande de mise à jour du ou des logiciels-constructeur, en fournissant par exemple comme paramètre la ou les adresses des modules concernés sur le bus "backplane",
- commande de lecture de l'état du système de chargement,
- commande d'identification de l'automate et des logiciels-constructeur,
- commande de Marche (RUN) et d'Arrêt (STOP) du ou des module(s), de façon à pouvoir arrêter un module avant de charger un logiciel-constructeur dans ce module.

L'étape de chargement pourrait également être commandée par un outil 34 appelé "OS Loader" utilisant des commandes FTP et proposant une interface homme-machine plus ergonomique qu'un simple client FTP 36. Cet outil 34 peut être paramétré par un fichier XML qui contrôle le déroulement du chargement.

Selon une autre caractéristique de l'invention, le composant de chargement-maître "Master Loader" 14 est également capable de lire, via les composants de chargement-module 15, 25, les logiciels-constructeur qui sont déjà chargés dans les mémoires Flash 12, 13, 22 des différents modules 10, 20 de l'automate 1. Cette caractéristique permet ainsi de faire de façon simple et rapide une sauvegarde sur une même carte mémoire 2 de l'ensemble des logiciels-constructeur de l'automate 1, en plus du logiciel-utilisateur.

Selon une autre caractéristique de l'invention, le composant de chargement-maître "Master Loader" 14 peut se contenter de lire certaines informations relatives à des fichiers des logiciels-constructeur déjà chargés dans les mémoires Flash 12, 13, 22, comme par exemple un numéro de version contenu dans un fichier du logiciel-constructeur. Dans ce cas et pour les différents logiciels-constructeur concernés, le fichier de commande exécuté par le composant de chargement-maître "Master Loader" 14 peut comporter des instructions permettant d'effectuer au préalable une lecture du numéro de version du logiciel-constructeur déjà chargé dans les mémoires Flash 12, 13, 22, comparer le numéro de version lu avec un numéro de version référence, et n'effectuer un nouveau chargement du logiciel-constructeur vers les mémoires Flash 12, 13, 22 que si le numéro de version lu n'est pas conforme à ce numéro de version référence. On évite ainsi des chargement inutiles (ou même interdits quand par exemple certaines versions ne sont pas compatibles entre elles), et on s'assure que tous les logiciels-constructeur présents dans l'automate ont une version homogène.

Dans la carte mémoire 2, les fichiers sont stockés simplement sous forme binaire selon une structure de fichiers classique prédéterminée. La carte mémoire 2 n'a donc pas besoin de programme complémentaire pour effectuer un chargement des logiciels-constructeur. Cette fonction est faite par le composant de chargement-maître "Master Loader" 14 du module de stockage 10 qui est capable de transformer les fichiers mémorisés dans la carte mémoire 2 via le protocole FTP, en ordres de chargement vers les mémoires Flash 12, 13, 22, compréhensibles par les composants de chargement-module 15, 25 des modules 10, 20.

Pour des raisons de commodité et de simplicité des commandes à utiliser, on peut envisager une structure de fichiers fixe pour les logiciels-constructeur de chaque module, constituée par exemple d'un ou plusieurs répertoires et sous-répertoires prédéterminés que l'on retrouve pour chaque module.

Tous les échanges d'informations entre la carte mémoire 2 et les mémoires Flash 12, 13, 22 des différents modules connectés sur le bus "fond de panier" 5 se font via le composant de chargement-maître ("Master Loader") 14 et les composants de chargement-module ("Device Loader") 15, 25. Ils sont transparents vis-à-vis de l'équipement extérieur 30, lequel n'a donc pas besoin de connaître les protocoles spécifiques utilisés sur le bus "fond de panier" et les protocoles utilisés pour écrire les mémoires Flash. Avantageusement, l'équipement extérieur 30 nécessite donc uniquement un simple client FTP 36.

## Revendications

1. Procédé de chargement d'au moins un logiciel-constructeur dans un automate programmable (1), ledit automate (1) comportant un module de stockage (10) qui dispose d'un logement (11) pour l'insertion d'un support mémoire amovible, le procédé comprenant une étape de stockage dans un support mémoire amovible (2) d'au moins un logiciel-constructeur destiné à au moins un module (10, 20) de l'automate (1), et une étape de chargement dudit logiciel-constructeur dans une mémoire non volatile (12, 13, 22) dudit module (10, 20) de l'automate (1), à partir du support mémoire amovible (2) inséré dans le logement (11) du module de stockage (10), **caractérisé en ce que** l'étape de chargement effectue un chargement du logiciel-constructeur dans une mémoire non volatile (22) d'un module (20) de l'automate (1) distinct du module de stockage (10) et relié au module de stockage (10) uniquement par un bus fond de panier (5) de l'automate (1).

2. Procédé selon la revendication 1, **caractérisé en ce que** l'étape de stockage est effectuée hors insertion du support mémoire amovible (2) dans le logement (11) du module de stockage (10).

3. Procédé selon la revendication 1, **caractérisé en ce que** l'étape de stockage est effectuée lorsque le support mémoire amovible (2) est inséré dans le logement (11) du module de stockage (10).

4. Procédé selon la revendication 3, **caractérisé en ce que** l'étape de stockage est effectuée selon un protocole de transfert de fichiers à partir d'un équipement extérieur (30) à l'automate (1), relié au module de stockage (10).

5. Procédé selon la revendication 4, **caractérisé en ce que** ledit protocole de transfert de fichiers est le protocole FTP.

6. Procédé selon la revendication 1, **caractérisé en ce que** l'étape de chargement est effectuée automatiquement à partir d'une action déclenchant l'exécution d'un fichier de commande stocké dans le support mémoire amovible (2).

7. Procédé selon la revendication 6, **caractérisé en ce que** l'étape de chargement comporte une lecture préalable d'une information relative à au moins un logiciel-constructeur mémorisé dans une mémoire non volatile (12, 13, 22) d'un module (10, 20) de l'automate (1).

8. Système de chargement d'au moins un logiciel-constructeur dans un automate programmable (1), l'automate (1) comportant un module de stockage (10) disposant d'un logement (11) pour l'insertion d'un support mémoire amovible (2), **caractérisé en ce que** ledit système comprend un composant de chargement-maître (14) qui est exécuté dans le module de stockage (10) et qui est apte à charger un logiciel-constructeur, stocké dans un support mémoire amovible (2) inséré dans le logement (11), dans une mémoire non volatile (12, 13, 22) d'un module (10, 20) de l'automate (1).

9. Système selon la revendication 8, **caractérisé en ce que** ledit module (10, 20) de l'automate (1) comprend un composant de chargement-module (15, 25) apte à charger dans une mémoire non volatile (12, 13, 22) dudit module (10, 20) un logiciel-constructeur stocké dans le support mémoire amovible (2) et transmis par le composant de chargement-maître (14).

10. Système selon la revendication 8, **caractérisé en ce qu'**il comprend des moyens de chargement automatique dudit logiciel-constructeur à partir d'une action déclenchant l'exécution d'un fichier de commande par le composant de chargement-maître (14), ledit fichier de commande étant stocké dans le support mémoire amovible (2).

11. Système selon la revendication 8, **caractérisé en ce que** le module de stockage (10) comprend un serveur FTP (16) permettant de stocker au moins un logiciel-constructeur sur le support mémoire amovible (2) inséré dans le logement (11), à partir d'un équipement extérieur (30) à l'automate (1) et relié au module de stockage (10).

12. Système selon la revendication 8, **caractérisé en ce que** le composant de chargement-maître (14) est apte à lire des logiciels-constructeur mémorisé dans un mémoire permanente (12, 13, 22) des modules (10, 20) de l'automate (1).

13. Système selon la revendication 12, **caractérisé en ce que** le composant de chargement-maître (14) est apte à stoker dans le support mémoire amovible (2) les logiciels-constructeur lus dans les modules (10, 20) de l'automate.

14. Système selon la revendication 8, **caractérisé en ce que** le support mémoire amovible (2) est une carte mémoire de type SD card.

15. Système selon la revendication 8, **caractérisé en ce que** la mémoire non volatile (12, 13, 22) est une mémoire Flash.
